(19) Europäisches Patentamt

European Patent Office

Office européen des brevets

(11) **EP 1 092 087 B1**

(12) **EUROPÄISCHE PATENTSCHRIFT**

(45) Veröffentlichungstag und Bekanntmachung des Hinweises auf die Patenterteilung:
**02.10.2002 Patentblatt 2002/40**

(51) Int Cl.7: **F02D 41/22**, F02D 41/28, F02P 17/00

(21) Anmeldenummer: **99929322.8**

(22) Anmeldetag: **01.07.1999**

(86) Internationale Anmeldenummer:
**PCT/EP99/04566**

(87) Internationale Veröffentlichungsnummer:
**WO 00/001944 (13.01.2000 Gazette 2000/02)**

(54) **VERFAHREN ZUM ÜBERWACHEN DER FUNKTION VON SENSOREN IN EINER BRENNKRAFTMASCHINE UND NACH DIESEM VERFAHREN ARBEITENDES ELEKTRONISCHES STEUERGERÄT**

METHOD FOR MONITORING THE FUNCTION OF DETECTORS IN AN INTERNAL COMBUSTION ENGINE AND ELECTRONIC CONTROL DEVICE WORKING IN ACCORDANCE WITH SAID METHOD

PROCEDE POUR SURVEILLER LE FONCTIONNEMENT DE DETECTEURS DANS UN MOTEUR A COMBUSTION INTERNE ET DISPOSITIF DE COMMANDE ELECTRONIQUE FONCTIONNANT SELON CE PROCEDE

(84) Benannte Vertragsstaaten:
**DE FR GB**

(30) Priorität: **02.07.1998 DE 19829622**
**02.07.1998 DE 19829621**

(43) Veröffentlichungstag der Anmeldung:
**18.04.2001 Patentblatt 2001/16**

(73) Patentinhaber:
• **SIEMENS AKTIENGESELLSCHAFT**
**80333 München (DE)**
• **Siemens VDO Automotive S.A.S.**
**31036 Toulouse cedex 01 (FR)**

(72) Erfinder:
• **ELLIOTT, Mark**
**D-93055 Regensburg (DE)**
• **FISCHER, Gerhard**
**D-93142 Maxhütte-Deglhof (DE)**

• **HAUG, Thomas**
**D-94315 Straubing (DE)**
• **BOLZ, Stephan**
**D-93102 Pfatter (DE)**
• **ROUPHAEL, Roger**
**F-31240 L'Union (FR)**
• **AMTMANN, Markus**
**D-93057 Regensburg (DE)**

(74) Vertreter: **Berg, Peter et al**
**European Patent Attorney,**
**Siemens AG,**
**Postfach 22 16 34**
**80506 München (DE)**

(56) Entgegenhaltungen:
**EP-A- 0 589 799      DE-A- 4 126 961**
**US-A- 4 716 874**

**Beschreibung**

Die Erfindung betrifft ein Verfahren nach Patentanspruch 1 und ein elektronisches Steuergerät nach dem Oberbegriff des unabhängigen Anspruchs 10.

Die wachsende Abhängigkeit grundlegender Funktionen in Kraftfahrzeugen - wie Zündung, Einspritzung und Klopfregelung - von elektronischen Steuersystemen stellt höchste Anforderungen an deren Zuverlässigkeit und bedingt Notlaufprogramme für den Fehlerfall. Deshalb gehört bei modernen mikroprozessorgesteuerten Systemen die Eigendiagnose zu den Grundfunktionen. Aufgabe der Eigendiagnose derartiger Steuersysteme ist es, Fehler zu erkennen und diagnostisch auszuwerten, gefährdete Komponenten durch geeignete Notlaufprogramme zu schützen sowie eventuell Ersatzgrößen für einen Notlauf bereitzustellen und eine Fehlermeldung an den Fahrer zu übermitteln.

Bei Sensoren ist es üblich, von den Sensorsignalen in einer Auswerteschaltung Meßwerte - z.B. dem Sensorsignal proportionale Spannungs- oder Stromwerte - abzuleiten und diese mit Hilfe von Plausibilitäts-Grenzwerten auf Plausibilität zu prüfen. Je nach Art des Sensors wird bei Über- oder Unterschreiten des Plausibilitäts-Grenzwerts über mehrere Meßzyklen hinweg eine Fehlfunktion des Sensors diagnostiziert.

Für eine Klopfregelung ist ein derartiges Verfahren aus der Druckschrift DE 41 26 961 A1 bekannt. Zur Unterdrückung des Klopfens einer Brennkraftmaschine wird in einer Auswerteschaltung aus den Sensorsignalen eines Klopfsensors periodisch in synchron zu den Motorzyklen der Brennkraftmaschine festgelegten Zeitintervallen ein Meßwert erzeugt. Dieser Meßwert wird dann mit einem festgesetzten Plausibilitäts-Grenzwert verglichen. Wenn dabei der Meßwert während einer vorbestimmten Anzahl von Motorzyklen unterhalb des Plausibilitäts-Grenzwerts bleibt, wird eine Fehlfunktion des Klopfsensors diagnostiziert und eine Zündverzögerungssteuerung durchgeführt, die das Klopfen unterdrückt.

Bei derartigen Verfahren ist jedoch eine Fehlererkennung nur dann möglich, wenn der Meßwert im Fehlerfall außerhalb eines durch den einwandfrei funktionierenden Sensor bestimmten Plausibilitätsbereichs liegt.

Der Erfindung liegt deshalb das Problem zugrunde, ein Verfahren zu entwickeln, das es ermöglicht, die Fehlfunktion eines Sensors in einer Brennkraftmaschine auch dann einwandfrei festzustellen, wenn die Meßwerte im Fehlerfall im Plausibilitätsbereich des Sensors liegen.

Dieses Problem wird erfindungsgemäß durch ein Verfahren mit den Merkmalen des Anspruchs 1 und durch ein Steuergerät nach Anspruch 10 gelöst. Vorteilhafte Weiterbildungen der Erfindung sind in den Unteransprüchen gekennzeichnet.

Im Fehlerfall werden die Meßwerte durch ein elektronisches Rauschen der Auswerteschaltung bestimmt. Die Amplitudenverteilung des elektronischen Rauschens ist dabei aufgrund seiner kohärenten Entstehung sehr schmal. Demgegenüber weisen die Meßwerte im Fall eines einwandfrei funktionerenden Sensors vor allem bei Sensoren mit großer Dynamik im Ausgangssignal - wie z.B. Klopfsensoren, Luftmassenmesser oder Magnetlagesensor für den Ventiltrieb eine deutlich breitere Amplitudenverteilung auf. Zieht man dieses Merkmal für die Überwachung der Funktion der Sensoren heran, spielt die Amplitudenhöhe der Meßwerte keine Rolle mehr, so daß auch dann eine sichere Fehlererkennung gewährleistet ist, wenn die Amplituden der Meßwerte im Fehlerfall etwa im Bereich derer im Normalbetrieb liegen.

Ein Ausführungsbeispiel der Erfindung wird im folgenden für einen Klopfsensor anhand der Figuren erläutert. Es zeigen:

Figur 1 ein Blockschaltbild eines Steuergeräts für eine Klopfregelung einer Brennkraftmaschine in einem Kraftfahrzeug,

Figur 2 eine qualitative Darstellung der Amplitudenverteilungen des Motorgeräusches und des elektronischen Rauschens der Auswerteschaltung,

Figur 3 ein Flußdiagramm einer ersten Ausführungsform des erfindungsgemäßen Verfahrens zum Überwachen der Funktion eines Klopfsensors und

Figur 4 ein Flußdiagramm einer zweiten Ausführungsform des erfindungsgemäßen Verfahrens zum Überwachen der Funktion eines Klopfsensors.

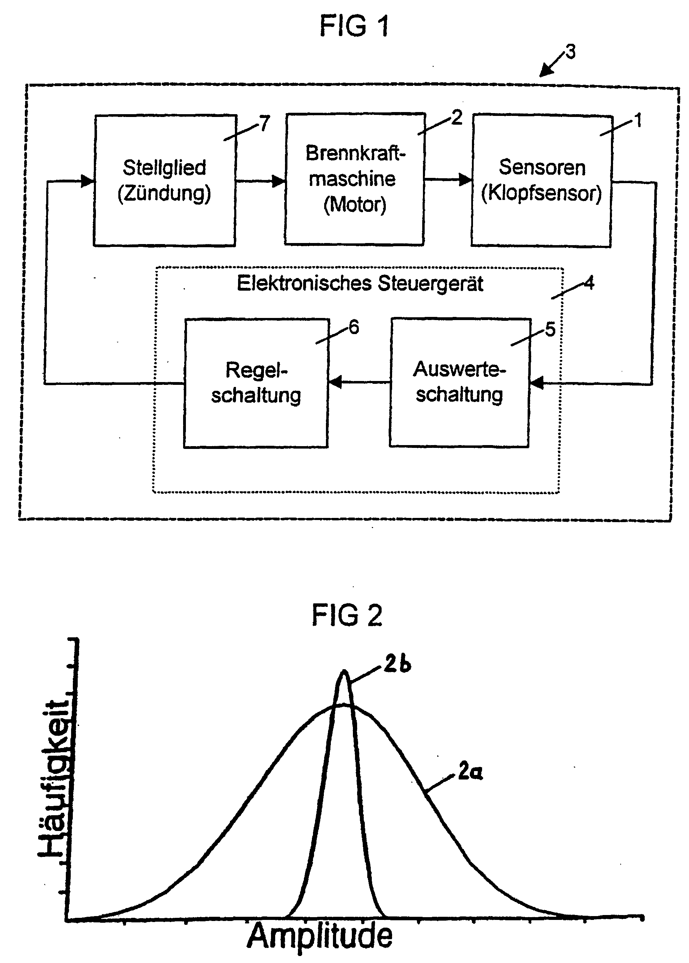

Ein oder mehrere Klopfsensoren 1 (Figur 1) nehmen den Körperschall an einer geeigneten Anbaustelle an der Brennkraftmaschine 2 eines Kraftfahrzeugs 3 - vorzugsweise direkt an den Zylindern - auf und wandeln ihn in ein elektrisches Sensorsignal, das einem elektronischen Steuergerät 4 zugeführt wird. Eine Auswerteschaltung 5 im Steuergerät 4 erzeugt eine dem Sensorsignal proportionale Ausgangsspannung (Meßwert). Aus vorhergehend gebildeten Meßwerten wird ein Vergleichswert, vorzugsweise als gleitender Mittelwert aus einer vorgegebenen Anzahl von vorhergehend gebildeten Meßwerten, berechnet. Der Vergleich des aktuellen Meßwerts mit einer vom Vergleichswert abhängigen Klopfschwelle führt zu der Entscheidung, ob Klopfen vorliegt. Eine Regelschaltung 6 beeinflußt dann über ein Stellglied 7 die Brennkraftmaschine 2 so, daß das Klopfen verschwindet. Der Zündzeitpunkt ist als Stellgröße besonders geeignet, da damit ein sehr schneller Eingriff möglich ist. Beim Auftreten von Klopfen wird der Zündzeitpunkt für eine vorgegebene Anzahl von Zyklen verzögert und dann wieder allmählich dem ursprünglichen Wert angenähert.

Bei einwandfrei funktionierendem Klopfsensor und klopffreiem Motorbetriebszustand ist der Meßwert also ein Maß für das Eigengeräusch des Motors (Motorgeräusch). Moderne Motoren erzeugen aber zunehmend weniger Eigengeräusch, so daß die Amplituden der Meßwerte und damit auch des Vergleichswerts bei funktionierendem Klopfsensor deutlich unterhalb derer früherer Modelle liegen. Außerdem weisen gängige Auswerteschaltungen die Eigenart auf, daß bei fehlendem Eingangssignal, also defektem Klopfsensor oder Kurzschluß gegen Batterie oder Masse, ein verstärktes elektronisches Rauschen auftritt. Damit verringert sich der Abstand zwischen dem Motorgeräusch und dem elektrischen Rauschen der Auswerteschaltung. Bei ungünstiger Konfiguration - leiser Motor und stark rauschende Auswerteschaltung - kann somit die Amplitude des Meßwerts im Fehlerfall im Bereich des Motorgeräusches liegen, so daß eine Fehlerdiagnose durch Vergleich mit einem Plausibilitäts-Grenzwert nicht mehr möglich ist.

Aufgrund der Vielzahl von Geräuschquellen im Motorbereich - z.B. Ventilschließen oder Kurbelwellenbewegungen - und der sich ständig ändernden Betriebsbedingungen weist das Motorgeräusch eine sehr breite, in der Kurve 2a der Figur 2 dargestellte Amplitudenverteilung auf. Demgegenüber zeigt die Kurve 2b das aufgrund seiner kohärenten Entstehung - z.B. durch kapazitives Übersprechen hochfrequenter Steuersignale auf den Meßkanal - schmale Amplitudenspektrum des elektronischen Rauschens der Auswerteschaltung im Fehlerfall. Somit ist die Schwankungsbreite der Meßwerte um den Vergleichswert bei einwandfrei funktionierendem Klopfsensor relativ groß, im Fehlerfall aber schwanken die Amplituden der Meßwerte nur in einem schmalen Bereich um den Vergleichswert.

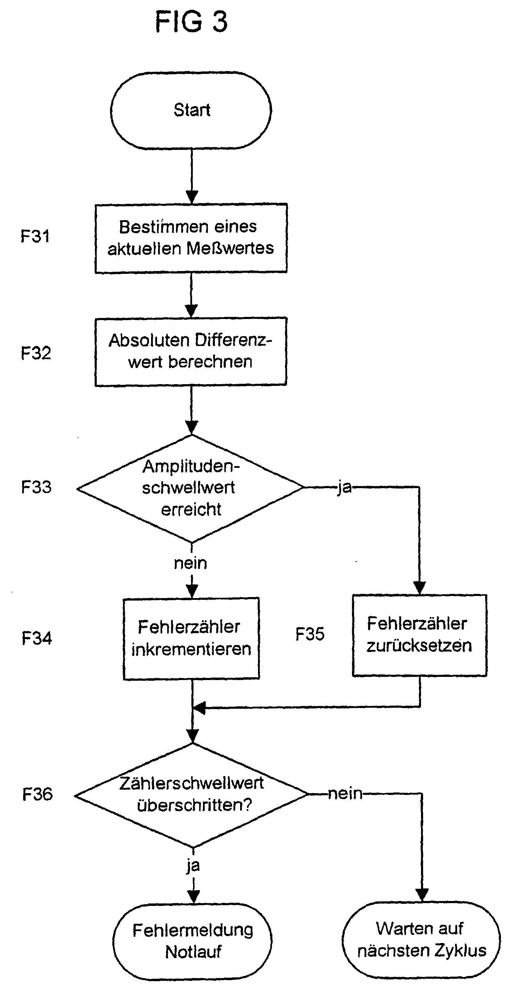

Anhand des Flußdiagramms von Figur 3 wird nun eine erste Ausführungsform des erfindungsgemäßen Verfahrens beschrieben, die es erlaubt, die Funktion des Klopfsensors unabhängig von der Amplitudenhöhe, dafür aber abhängig vom Amplitudenspektrum der Meßwerte zu überwachen. Zunächst wird in einem Schritt F31 ein aktueller Meßwert MW bestimmt. In einem Schritt F32 wird ein absoluter Differenzwert DW zwischen dem Vergleichswert VW und dem aktuellen Meßwert MW berechnet.

$$DW = |VW-MW|$$

Dieser absolute Differenzwert DW wird dann in einem Schritt F33 mit einem vorgegebenen Amplitudenschwellwert, z.B. 80 mV, verglichen. Dieser Schwellwert wird abhängig von der Bandbreite der Meßwerte im Fehlerfall so festgelegt, daß er von einem im Fehlerfall möglichen Differenzwert DW nicht erreicht wird. Vorteilhaft kann der Amplitudenschwellwert zusätzlich auch abhängig von der Motordrehzahl festgelegt werden. Gemeinsam entsprechen die Schritte F32 und F33 einem Vergleich des aktuellen Meßwerts mit einem den Vergleichswert einschließenden Amplitudenbereich - im folgenden kurz als Amplitudenfenster bezeichnet.

Liegt der absolute Differenzwert unterhalb des Amplitudenschwellwerts, also der Meßwert innerhalb des Amplitudenfensters, so wird in einem Schritt F34 ein Fehlerzähler um einen konstanten Wert, vorzugsweise um Eins inkrementiert. Liegt der absolute Differenzwert aber über dem Amplitudenschwellwert, der Meßwert also außerhalb des Amplitudenfensters, so wird der Fehlerzähler in einem Schritt F35 zurückgesetzt, d. h. entweder auf Null gesetzt oder um einen vorgegebenen Wert dekrementiert. In einem Schritt F36 wird dann der Zählwert des Fehlerzählers mit einem vorgegebenen Zählerschwellwert, z.B. 150, verglichen. Liegt der Zählwert dabei unterhalb des Zählerschwellwertes, so wird der Überwachungsalgorithmus bis zum Beginn eines neuen Meßzyklus in einen Wartezustand versetzt. Überschreitet der Zählwert aber den Zählerschwellwert, so wird eine Fehlfunktion des Klopfsensors diagnostiziert, eine Fehlermeldung an den Fahrer übermittelt - z. B. durch Aktivierung einer Warnleuchte - und ein Notlauf der Brennkraftmaschine gestartet. Dabei wird die Klopfregelung außer Betrieb gesetzt und der Zündzeitpunkt dauerhaft auf einen klopffreien Wert eingestellt. Diese Ausführungsform kann auch so abgeändert werden, daß der Überwachungsalgorithmus nach Rücksetzen des Fehlerzählers (Schritt F35) unmittelbar in den Wartezustand versetzt wird, ohne den Zählwert des Fehlerzählers vorher mit dem Zählerschwellwert zu vergleichen (Schritt F36) .

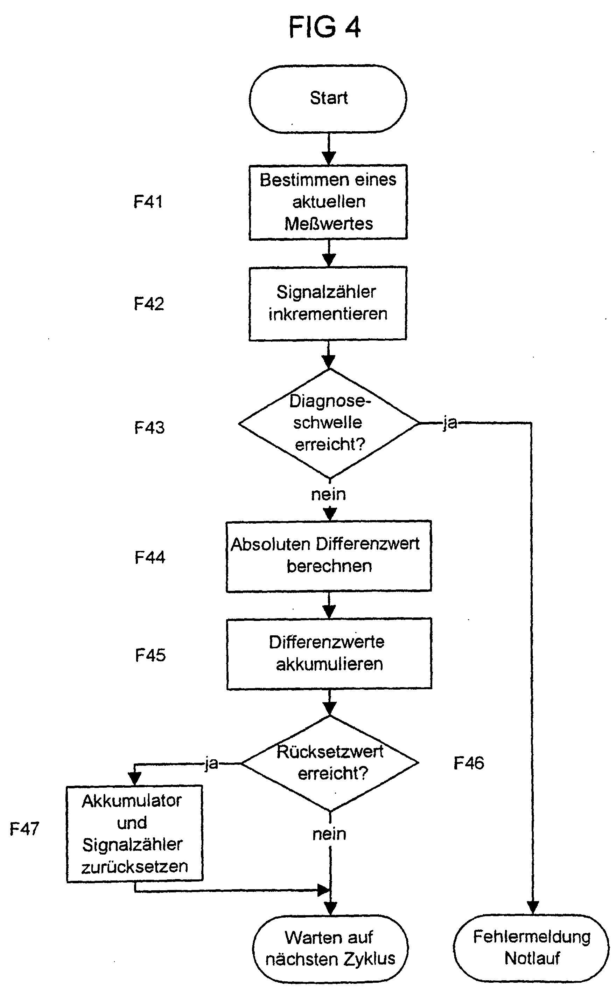

Anhand des Flußdiagramms von Figur 4 wird nun eine zweite Ausführungsform des erfindungsgemäßen Verfahrens beschrieben. In einem Schritt F41 wird ein aktueller Meßwert bestimmt. In einem Schritt F42 wird ein Signalzähler bei jedem ankommenden Meßwert um einen konstanten Wert, vorzugsweise um Eins inkrementiert. Der Wert des Signalzählers wird in einem Schritt F43 mit einem vorgegebenen Diagnoseschwellwert, z.B. 150, verglichen. Bleibt der Wert dabei unterhalb der Diagnoseschwelle, so wird in einem Schritt F44, analog zum Schritt F33 der ersten Ausführungsform, ein absoluter Differenzwert aus dem aktuellen Meßwert und dem Vergleichswert gebildet.

In einem Schritt F45 werden diese absoluten Differenzwerte mit Hilfe eines Akkumulators akkumuliert, beispielsweise einfach aufsummiert. Der akkumulierte Differenzwert wird anschließend in einem Schritt F46 mit einem vorgegebenen Rücksetzwert, z.B. 8V, verglichen. Dieser Rücksetzwert wird abhängig von der Bandbreite der Meßwerte im Fehlerfall festgelegt. Vorteilhaft kann der Rücksetzwert zusätzlich auch abhängig von der Motordrehzahl festgelegt werden. Wird dieser Rücksetzwert nicht erreicht, so wird der Überwachungsalgorithmus bis zum Beginn eines neuen Meßzyklus in einen Wartezustand versetzt. Andernfalls werden sowohl der Akkumulator als auch der Signalzähler zunächst in einem Schritt F47 zurückgesetzt, d. h. entweder wieder auf Null gesetzt oder um einen vorgegebenen Wert dekrementiert, und erst anschließend wird der Überwachungsalgorithmus in den Wartezustand versetzt. Erreicht aber der Wert des Signalzählers in dem in Schritt F43 durchgeführten Vergleich den Diagnoseschwellwert, so wird eine Fehlfunktion des Sensors diagnostiziert und analog zur ersten Ausführungsform eine Fehlermeldung an den Fahrer übermittelt und ein Notlauf der Brennkraftmaschine gestartet. Die Abfrage des Wertes des Signalzählers (Schritt F43) kann alternativ zur beschriebenen Ausführungsform auch nach der Abfrage des akkumulierten Differenzwertes (Schritte F46 und F47) erfolgen.

Ist der Klopfsensor nur einem einzigen Zylinder der Brennkraftmaschine zugeordnet, so wird nur bei jeder zweiten Kurbelwellenumdrehung , also jedem zweiten Motorzyklus, ein Meßzyklus gestartet und damit ein Meßwert erfaßt. Durch Anbau des Klopfsensors an einer geeigneten Stelle am Motorblock, z.B. zwischen den Zylindern, ist es möglich, mit einem Sensor den Körperschall mehrerer unabhängiger Zylinder aufzunehmen. Auf diese Weise werden pro Motorzyklus-auch mehrere Meßzyklen möglich und somit mehrere Meßwerte erfaßt, so daß sich die benötigte Diagnosezeit bei unveränderten Schwellwerten reduziert. Zusätzlich kann bei der ersten Ausführungsform die Wahrscheinlichkeit irrtümlich diagnostizierter Sensorfehler dadurch verringert werden, daß der Fehlerzähler nur dann inkrementiert wird (Schritt F34), wenn die Meßwerte unterschiedlicher Zylinder auf eine Fehlfunktion hindeuten, d.h. mehrere aufeinanderfolgende Differenzwerte unterhalb der Amplitudenschwelle liegen.

Bei beiden Ausführungsformen hängt die Diagnose einer Sensorfehlfunktion nicht von der Zeit, sondern von der Anzahl durchlaufener Motorzyklen ab. Das hat den Vorteil, daß die Anzahl der zur Diagnose herangezogenen Meßwerte unabhängig ist von der Drehzahl des Motors.

Bei beiden Ausführungsformen besteht die Möglichkeit, bei Diagnose einer Fehlfunktion des Klopfsensors einen zusätzlichen Zähler zu starten und die Übermittlung der Fehlermeldung und den Notlauf erst dann einzuleiten, wenn der Wert dieses Zählers einen vorgegebenen Schwellwert, z.B. 5, überschreitet. Auf diese Weise kann die Wahrscheinlichkeit irrtümlich diagnostizierter Sensorausfälle verringert werden.

Die Robustheit des Systems kann durch geeignete Verknüpfung beider Ausführungsformen innerhalb eines Steuergerätes deutlich erhöht werden. Dabei wird der Fehler erst dann dem Fahrer gemeldet und der Notlauf der Brennkraftmaschine gestartet, wenn von beiden Algorithmen unabhängig voneinander eine Sensorfehlfunktion diagnostiziert wird. Die Wahrscheinlichkeit irrtümlich diagnostizierter Fehler wird dadurch erheblich verringert.

Die Erfindung wurde beispielhaft für eine Klopfregelung beschrieben, es sei aber darauf hingewiesen, daß entsprechende Verfahren auch für andere Sensoren - vorzugsweise solche mit großer Dynamik im Ausgangssignal, wie z. B. Luftmassenmesser oder Magnetlagesensoren für den Ventiltrieb - in einer Brennkraftmaschine anwendbar sind.

**Patentansprüche**

1.  Verfahren zum Überwachen der Funktion eines Sensors (1) in einer Brennkraftmaschine (2), bei dem

    - aus Sensorsignalen in einer Auswerteschaltung (5) Meßwerte gebildet werden,
    - aus vorhergehend gebildeten Meßwerten ein Vergleichswert berechnet wird und
    - die Diagnose einer Fehlfunktion des Sensors (1) abhängig von der Amplitudenverteilung der Meßwerte um den Vergleichswert erfolgt.

2.  Verfahren nach Anspruch 1, **dadurch gekennzeichnet, daß** der Vergleichswert als gleitender Mittelwert aus vorhergehenden Meßwerten berechnet wird.

3.  Verfahren nach Anspruch 1 oder 2, **dadurch gekennzeichnet,**

    - **daß** ein den Vergleichswert einschließendes Amplitudenfenster festgelegt wird,
    - **daß** der Wert eines Fehlerzählers inkrementiert wird, wenn ein Meßwert innerhalb dieses Amplitudenfensters liegt,
    - **daß** der Wert des Fehlerzählers zurückgesetzt wird, wenn der Meßwert außerhalb dieses Amplitudenfensters liegt, und
    - **daß** eine Fehlfunktion des Sensors (1) diagnostiziert wird, wenn der Wert des Fehlerzählers einen vorgegebenen Zählerschwellwert überschreitet.

4.  Verfahren nach Anspruch 3, **dadurch gekennzeichnet, daß** die Bandbreite des Amplitudenfensters von der Amplitudenverteilung eines im Fehlerfall auftretenden elektronischen Rauschens der Auswerteschaltung (5) abhängig ist.

5.  Verfahren nach Anspruch 4, **dadurch gekennzeichnet, daß** die Bandbreite des Amplitudenfensters von der Motordrehzahl der Brennkraftmaschine (2) abhängig ist.

6.  Verfahren nach Anspruch 1 oder 2, **dadurch gekennzeichnet,**

    - **daß** absolute Differenzwerte zwischen den Meßwerten und den Vergleichswerten berechnet werden,
    - **daß** die absoluten Differenzwerte mit Hilfe eines Akkumulators akkumuliert werden,

- **daß** der Wert eines Signalzählers bei jedem neuen Meßwert inkrementiert wird,
- **daß** der Wert des Akkumulators und der Wert des Signalzählers zurückgesetzt werden, wenn der akkumulierte Differenzwert einen vorgegebenen Rücksetzwert überschreitet, und
- **daß** eine Fehlfunktion des Sensors (1) diagnostiziert wird, wenn der Wert des Signalzählers einen vorgegebenen Diagnoseschwellwert überschreitet.

7. Verfahren nach Anspruch 6, **dadurch gekennzeichnet, daß** der Rücksetzwert von der Amplitudenverteilung eines im Fehlerfall auftretenden elektronischen Rauschens der Auswerteschaltung (5) abhängig ist.

8. Verfahren nach Anspruch 7, **dadurch gekennzeichnet, daß** der Rücksetzwert von der Motordrehzahl der Brennkraftmaschine (2) abhängig ist.

9. Verfahren nach einem der vorhergehenden Ansprüche, **dadurch gekennzeichnet, daß** bei Diagnose einer Fehlfunktion des Sensors (1) eine Fehlermeldung an den Fahrer übermittelt wird und ein Notlauf der Brennkraftmaschine (2) gestartet wird.

10. Elektronisches Steuergerät (4) für eine Brennkraftmaschine (2), **dadurch gekennzeichnet, daß** das Steuergerät (4) eine Einrichtung aufweist, durch die eine Funktionsdiagnose der Sensoren (1) nach Verfahren nach den Ansprüchen 3 und 6 parallel durchgeführt wird und bei übereinstimmender Diagnose einer Fehlfunktion der Sensoren (1) eine Fehlermeldung an den Fahrer übermittelt und ein Notlauf der Brennkraftmaschine (2) gestartet wird.

**Claims**

1. Method for monitoring the functioning of a sensor (1) in an internal combustion engine (2), whereby

   - measured values are formed from sensor signals in an evaluation circuit (5),
   - a comparison value is calculated from previously formed measured values, and
   - the diagnosis of a malfunction of the sensor (1) is performed dependent on the amplitude distribution of the measured values around the comparison value.

2. Method according to Claim 1, **characterised in that** the comparison value is calculated as a sliding mean value from previously formed measured values.

3. Method according to Claim 1 or 2, **characterised in that**

   - an amplitude window including the comparison value is specified,
   - the value of a fault counter is incremented when a measured value lies within this amplitude window,
   - the value of the fault counter is reset when the measured value lies outside this amplitude window, and
   - a malfunction of the sensor (1) is diagnosed when the value of the fault counter exceeds a predefined counter threshold value.

4. Method according to Claim 3, **characterised in that** the bandwidth of the amplitude window is dependent on the amplitude distribution of electronic noise occurring in the evaluation circuit (5) in the event of a fault.

5. Method according to Claim 4; **characterised in that** the bandwidth of the amplitude window is dependent on the rotational speed of the internal combustion engine (2).

6. Method according to Claim 1 or 2, **characterised in that**

   - absolute difference values between the measured values and the comparison values are calculated,
   - the absolute difference values are accumulated with the aid of an accumulator,
   - the value of a signal counter is incremented for each new measured value,
   - the value of the accumulator and the value of the signal counter are reset when the accumulated difference value exceeds a predefined reset value, and
   - a malfunction of the sensor (1) is diagnosed when the value of the signal counter exceeds a predefined diagnostic threshold value.

7. Method according to Claim 6, **characterised in that** the reset value is dependent on the amplitude distribution of electronic noise occurring in the evaluation circuit (5) in the event of a fault.

8. Method according to Claim 7, **characterised in that** the reset value is dependent on the rotational speed of the internal combustion engine (2).

9. Method according to one of the preceding claims, **characterised in that** when a malfunction of the sensor (1) is diagnosed a fault indication is reported to the driver and emergency operation of the internal combustion engine (2) is started.

**10.** Electronic control unit (4) for an internal combustion engine (2), **characterised in that** the control unit (4) has a facility by means of which a functional diagnosis of the sensors (1) is carried out in parallel on the basis of methods according to Claims 3 and 6, and when consistent diagnosis of a malfunction of the sensors (1) is obtained an error indication is reported to the driver and emergency operation of the internal combustion engine (2) is started.

**Revendications**

**1.** Procédé de surveillance du fonctionnement d'un capteur (1) dans un moteur à combustion interne (2), dans lequel :

- des valeurs de mesure sont formées dans un circuit d'évaluation (5), à partir de signaux de capteurs,
- une valeur de comparaison est calculée à partir des valeurs de mesure formées précédemment, et
- le diagnostic d'un fonctionnement défectueux du capteur (1) est effectué en fonction de la répartition des amplitudes des valeurs de mesure autour de la valeur de comparaison.

**2.** Procédé selon la revendication 1, **caractérisé en ce que** la valeur de comparaison est calculée sous la forme de valeur moyenne glissante, à partir des valeurs de mesure précédentes.

**3.** Procédé selon la revendication 1 ou 2, **caractérisé en ce que** :

- une fenêtre d'amplitudes, incluant la valeur de comparaison, est fixée,
- la valeur d'un compteur de défauts est incrémentée, lorsque la valeur de mesure est située à l'intérieur de cette fenêtre d'amplitudes,
- la valeur du compteur de défauts est soumise à un fonctionnement à rebours lorsque la valeur de mesure est située hors de cette fenêtre d'amplitudes, et
- un fonctionnement défectueux du capteur (1) est diagnostiqué, lorsque la valeur du compteur de défauts dépasse une valeur seuil de compteur prédéterminée.

**4.** Procédé selon la revendication 3, **caractérisé en ce que** la largeur de bande de la fenêtre d'amplitudes dépend de la distribution d'amplitude d'un bruit électronique du circuit d'évaluation (5), se produisant en cas de défaut.

**5.** Procédé selon la revendication 4, **caractérisé en ce que** la largeur de bande de la fenêtre d'amplitude dépend de la vitesse de rotation du moteur à combustion interne (2) .

**6.** Procédé selon la revendication 1 ou 2, **caractérisé en ce que**

- des valeurs de différence absolue sont calculées entre les valeurs de mesure et les valeurs de comparaison,
- les valeurs de différence absolue sont accumulées à l'aide d'un accumulateur,
- la valeur d'un compteur de signal est incrémentée à chaque nouvelle valeur de mesure,
- la valeur de l'accumulateur et la valeur du compteur de signal sont soumises à un traitement à rebours, lorsque la valeur de différence accumulée dépasse une valeur de réinitialisation prédéterminée, et
- un fonctionnement défectueux du capteur (1) est diagnostiqué lorsque la valeur du compteur de signal dépasse une valeur seuil de diagnostic prédéterminée.

**7.** Procédé selon la revendication 1, **caractérisé en ce que** la valeur de réinitialisation dépend de la distribution d'amplitude d'un bruit électronique du circuit d'évaluation (5), se produisant en cas de défaut.

**8.** Procédé selon la revendication 7, **caractérisé en ce que** la valeur de réinitialisation dépend de la vitesse de rotation du moteur à combustion interne (2).

**9.** Procédé selon l'une des revendications précédentes, **caractérisé en ce qu'**en cas de diagnostic d'un fonctionnement défectueux du capteur (1), un avertissement de défaut est transmis au conducteur et un fonctionnement de secours du moteur à combustion interne (2) est lancé.

**10.** Appareil de commande (4) électronique pour un moteur à combustion interne (2), **caractérisé en ce que** l'appareil de commande (4) comporte un dispositif au moyen duquel un diagnostic de fonctionnement des capteurs (1) selon le procédé suivant les revendications 3 et 6 est effectué en parallèle et, en cas de coïncidence d'un diagnostic de fonctionnement défectueux des capteurs (1), un avertissement de défaut est transmis au conducteur et un fonctionnement de secours du moteur à combustion interne (2) est lancé.

EP 1 092 087 B1

## FIG 1

```
                                                              3
  ┌──────────────────────────────────────────────────────────┐
  │    ┌──────────┐ 7   ┌──────────┐ 2   ┌──────────┐ 1       │
  │    │ Stellglied│     │Brennkraft-│     │ Sensoren │        │
  │──► │ (Zündung) │ ──► │maschine  │ ──► │(Klopf-   │        │
  │    │          │     │(Motor)   │     │sensor)   │        │
  │    └──────────┘     └──────────┘     └──────────┘        │
  │    ┌········································4···········┐  │
  │    ·   Elektronisches Steuergerät                      ·  │
  │    ·  ┌──────────┐ 6   ┌──────────┐ 5                  ·  │
  │    ·  │ Regel-   │     │Auswerte- │                    ·  │
  │◄──────│schaltung │ ◄── │schaltung │ ◄──────────────       │
  │    ·  └──────────┘     └──────────┘                    ·  │
  │    └····················································┘  │
  └──────────────────────────────────────────────────────────┘
```

## FIG 2

Häufigkeit vs Amplitude — Kurven 2b, 2a

# FIG 3

```
                    ┌─────────────┐
                    │    Start    │
                    └──────┬──────┘
                           │
                           ▼
       ┌───────────────────────────────┐
F31    │     Bestimmen eines           │
       │     aktuellen Meßwertes       │
       └───────────────┬───────────────┘
                       │
                       ▼
       ┌───────────────────────────────┐
F32    │     Absoluten Differenz-      │
       │     wert berechnen            │
       └───────────────┬───────────────┘
                       │
                       ▼
              ◇ Amplituden-                ja
F33           ◇ schwellwert    ◇──────────────┐
              ◇ erreicht    ◇                 │
                     │                        │
                    nein                      │
                     │                        │
                     ▼                        ▼
       ┌──────────────────┐      ┌──────────────────┐
F34    │  Fehlerzähler    │  F35 │  Fehlerzähler    │
       │  inkrementieren  │      │  zurücksetzen    │
       └────────┬─────────┘      └────────┬─────────┘
                │◄───────────────────────┘
                │
                ▼
         ◇ Zählerschwellwert        nein
F36      ◇ überschritten?   ◇──────────────┐
                │                           │
                ja                          │
                │                           │
                ▼                           ▼
       ┌──────────────┐           ┌──────────────────┐
       │ Fehlermeldung│           │  Warten auf       │
       │   Notlauf    │           │  nächsten Zyklus  │
       └──────────────┘           └──────────────────┘
```

# FIG 4

Start

F41 | Bestimmen eines aktuellen Meßwertes

F42 | Signalzähler inkrementieren

F43 | Diagnose-schwelle erreicht? — ja

nein

F44 | Absoluten Differenzwert berechnen

F45 | Differenzwerte akkumulieren

F46

ja — Rücksetzwert erreicht?

F47 | Akkumulator und Signalzähler zurücksetzen

nein

Warten auf nächsten Zyklus

Fehlermeldung Notlauf